Europäisches Patentamt

European Patent Office

Office européen des brevets

(11) Publication number: **0 527 705 A1**

# EUROPEAN PATENT APPLICATION

(21) Application number: **92810597.2**

(22) Date of filing: **05.08.92**

(51) Int. Cl.⁵: **D03D 49/18**, G01L 5/10

(30) Priority: **12.08.91 JP 201633/91**

(43) Date of publication of application:
**17.02.93 Bulletin 93/07**

(84) Designated Contracting States:
**BE DE FR IT**

(71) Applicant: **Kabushiki Kaisha Toyoda Jidoshokki Seisakusho**
**1, Toyoda-cho 2-chome, Kariya-shi**
**Aichi-ken(JP)**

(72) Inventor: **Fukumura, Osamu, c/o KABUSHIKI KAISHA TOYODA**
**JIDOSHOKKI SEISAKUSHO, 1, Toyoda-cho 2-chome**
**Kariya-shi, Aichi-ken(JP)**

(74) Representative: **Hammer, Bruno, Dr.**
**c/o Gebrüder Sulzer AG, KSR/Patente/0007**
**CH-8401 Winterthur (CH)**

(54) Method and apparatus for detecting warp tension in a weaving loom.

(57) It is an object of the invention is to provide a warp tension detecting apparatus having a good durability. The warp yarn sheet (T) unwound from the warp beam (1) is fed while being guided by the back roller (2) and then the warp tension detecting roller (3). The warp tension detecting roller (3) is supported at its opposite ends by easing levers (12, 13) which are in turn supported depending therefrom by means of pins (14, 15). The warp tension detecting arms (10, 11) are supported independently and rotatably by the back brackets by way of the separate support shafts (6, 7), respectively. The rotation of the warp tension detecting arm (10) about the shaft (6) is stopped by the load cell (19) and the rotation of the other arm (11) about the shaft (7) is stopped by the rod (18).

F i g. 2

The present invention relates to a method and an apparatus of detecting warp tension in a weaving loom having a roller adapted to receive the tension of warp yarns for detection thereof while guiding such warp yarns.

A warp tension detecting apparatus of the above type is disclosed by Publication of Japanese Patent Application No. 1-266241 (1989). This prior art apparatus includes a tension detecting roller having its opposite ends supported by a pair of tension levers which are in turn supported by detecting levers. A load cell is interposed between one detecting lever and a stationary portion of a loom frame so that the warp tension is transmitted from the roller to the load cell through the tension lever and the detecting lever. The paired detecting levers are interconnected by a single support shaft rotatably mounted between opposite side frames of the loom and each detecting lever is fixedly connected to its corresponding end of the support shaft. In such an arrangement, the whole warp tension exerted on the tension roller is transmitted to the load cell and such warp tension is detected by the load cell.

However, the support shaft interconnecting the paired detecting levers tends to have flexural oscillation under the influence of vibration which is typical of loom operation and such flexural oscillation badly affects the durability of the support shaft. The support shaft should be rigid enough to resist the flexural oscillation. Though the shaft should be made larger in diameter for a loom having an increased weaving width, such enlargement of the shaft for rigidity improvement inevitably invites an increase in the shaft weight and hence in its manufacturing cost.

It is an object of the present invention, therefore, to provide a warp tension detecting apparatus that can solve the above problems successfully.

According to the invention, there is provided a warp tension detecting roller supported at its opposite ends by respective tension detecting arms which are in turn supported by separate support shafts.

Also according to the invention, partial warp tension transmitted to either one of the arms is detected and the whole warp tension is calculated on the basis of the detected partial warp tension.

Because the paired tension detecting arms are supported by separate shafts, each of the shafts can be made short enough to be free from flexural oscillation and, therefore, there will be no need for rigidity improvement for a loom with an increased weaving width.

Though the tension detecting arms are urged to rotate about the support shafts by the tension of warp yarns, their rotation is stopped by any suitable tension receiving members located between the respective tension detecting arms and stationary portions of the loom. Either one of the tension receiving members includes a pressure responsive member, e.g. a load cell, for detecting partial warp tension which is transmitted to the corresponding arm. The other partial warp tension is carried by the opposite tension detecting arm and it can be calculated on the basis of the warp tension distribution along the weaving width and the above detected warp tension. The tension of the whole warp yarns is the sum of the detected tension and the calculated tension.

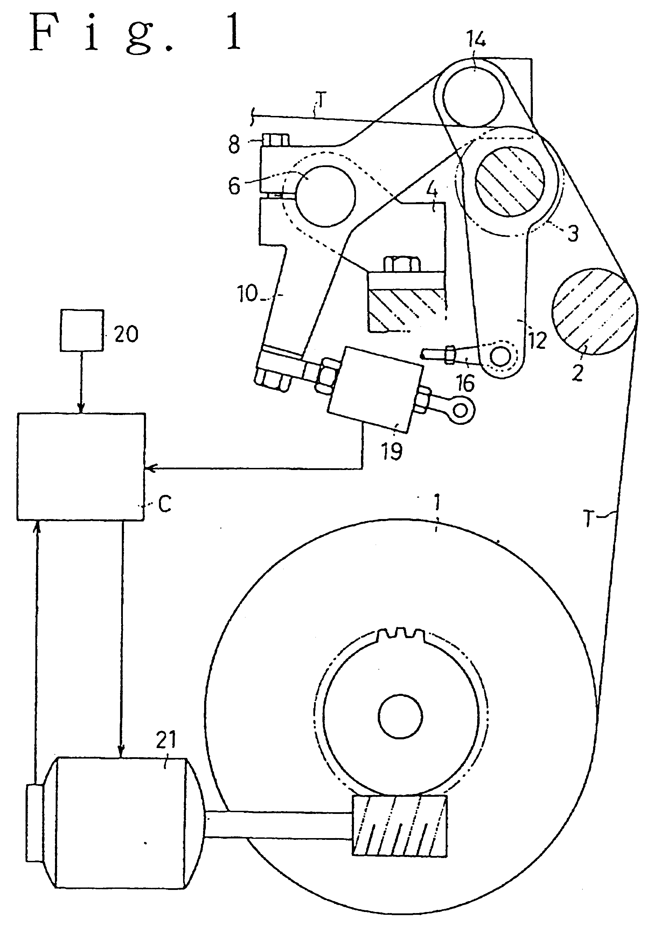

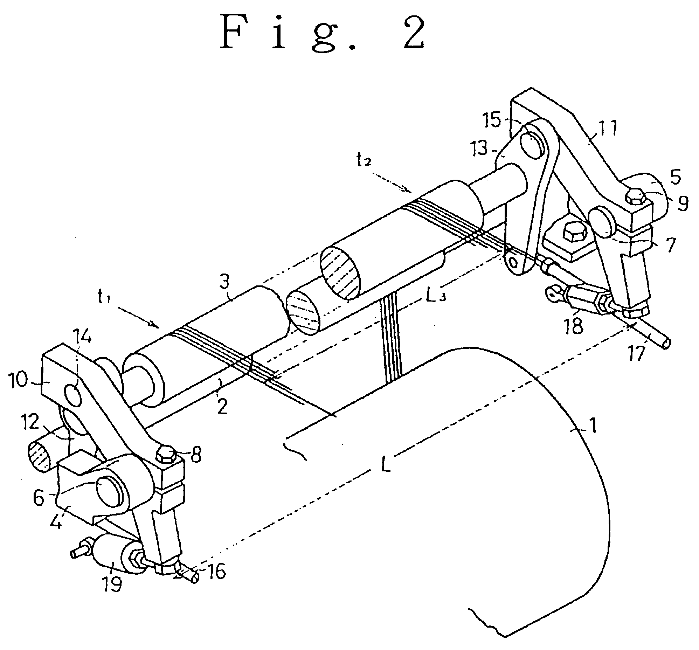

The following will describe an embodiment of the warp tension detecting apparatus of the present invention with reference to FIGS. 1 and 2.

FIG. 1      is a side view partially in section showing the embodiment of warp yarn tension detecting apparatus of the present invention.

FIG. 2      is a perspective view showing the embodiment.

FIG. 3      is a perspective view showing another embodiment of the apparatus according to the present invention.

Reference numeral 1 designates a warp beam driven to rotate by a motor 21. A sheet of warp yarns T unwound from the warp beam 1 is guided by a back roller 2 and then a tension detecting roller 3 in contact therewith. The back roller 2 is supported between lateral side frames (not shown) of a loom in a rotatable but not displaceable manner.

Back brackets 4, 5 are stationarily disposed adjacent the respective opposite ends of the back roller 2 and rotatably support a pair of shafts 6, 7 in a cantilever manner. The shafts 6. 7 have tension detecting arms 10, 11 clamped thereto by bolts 8, 9. The tension detecting arms 10, 11 have at one ends thereof pins 14, 15 which support easing levers 12, 13 depending therefrom. The tension detecting roller 3 is rotatably supported at its opposite ends by the easing levers 12, 13 at their center portions.

The easing levers 12, 13 are operatively connected to a crank mechanism (not shown) of the loom by way of easing rods 16, 17, respectively, so that the levers 12, 13 are swung back and forth about the pins 14, 15 in response to the warp tension change taking place periodically for each complete turn of the loom. Such swinging motion of the easing levers 12, 13 causes the tension detecting roller 3 to swing about the pins 14, 15 in synchronism with the periodic change in the warp tension thereby to absorb such tension change.

A load cell 19 is interposed between one tension detecting arm 10 and a stationary portion of the loom, while a rod 18 is located between the other tension detecting arm 11 and a stationary portion of the loom. The tension To of the whole warp yarns received by the tension detecting roller 3 is distributed to the opposite easing levers 12, 13 and received ultimately by the load cell 19 and the rod 18 by way of the tension detecting arms 10, 11, respectively, and the rotation of the arms 10, 11 about the shafts 6, 7 is prevented by the load cell 19 and the rod 18. That is, the load cell 19 is adapted to detect a partial warp tension T1 transmitted thereto through the tension detecting arm 10.

The partial tension $T_1$ transmitted through the detecting arm 10 and a partial tension $T_2$ transmitted to the rod 18 through the detecting arm 11 can be expressed by the following equations (1) and (2), respectively.

$$T_1 = T_0 \ (L_2 + L_3/2)/L \qquad (1)$$

$$T_2 = T_0 \ (L_1 + L_3/2)/L \qquad (2)$$

where, $T_0$ represents the tension of all warp yarns, L the distance between the rod 18 and the load cell 19, $L_1$ the distance between the load cell 19 and its adjacent lateral end $t_1$ of the warp sheet T, $L_2$ the distance between the rod 18 and its adjacent lateral end $t_2$ of the warp sheet T, and $L_3$ the distance between $t_1$ and $t_2$.

The equation (3) below can be introduced from the equations (1) and (2).

$$T_2/T_1 = (L_1 + L_3/2)/(L_2 + L_3/2) \qquad (3)$$

The data of tension $T_1$ detected by the load cell 19 is transmitted to a computer control C which in turn calculates the tension $T_2$ on the basis of the detected tension $T_1$ and the equation (3). The tension $T_{12}$ of all warp yarns is the sum of the tension $T_1$ and the tension $T_2$. Comparing the tension $T_{12}$ with the desired target warp tension $T_0$, the data of which tension $T_{12}$ is previously inputted to the control C through an input device 20, the control C is operated to control the rotational speed of the motor 21 in such a way that the tension $T_{12}$ coincides with the target tension $T_0$.

As it is now apparent from the foregoing, because the shafts 6, 7 supporting the tension detecting arms 10, 11 are provided separately, they are free from harmful flexural oscillation which is otherwise produced by the vibration typical of the loom operation. The separate support shafts 6, 7 only have to be long enough just to support the tension detecting arms 10, 11 and their rigidity does not have to be increased for a loom with a greater weaving width. Thus, the warp tension detecting apparatus of the invention can improve its durability while reducing the weight and manufacturing cost of the support members for the tension detecting arms 10, 11. Furthermore, the apparatus of the invention requires no space for installation of a shaft between the tension detecting arms 10, 11, thus providing sufficient room for installing other component parts of the loom.

Additionally, according to the above-described embodiment, the tension $T_{12}$ of all warp yarns can be monitored by detecting the tension $T_1$ applied to the load cell 19 through only one tension detecting arm 10. Therefore, the use of only a single load cell 19 can serve for the purpose of warp tension controlling.

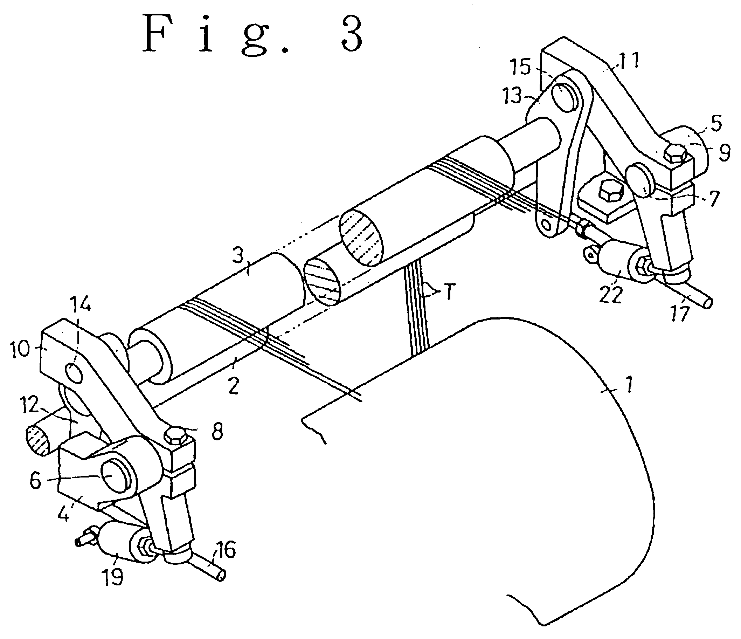

It is to be noted that the present invention is not limited to the above embodiment, but it may be practiced in other modified forms, as exemplified in FIG. 3. In this modification, the warp tensions $T_1$ and $T_2$ received by the tension detecting arms 10, 11 are detected by two load cells 19, 22 and the tension $T_{12}$ of all warp yarns is calculated by adding the detected tensions $T_1$ and $T_2$. Alternatively, it may be so arranged that the warp tension is received by two rods through the tension detecting arms 10, 11 and the tension is detected by detecting the strains produced in the arms 10, 11 by use of any suitable strain detectors.

According to the above-described invention, wherein there is provided a warp tension detecting roller supported at its opposite ends by respective tension detecting arms which are in turn supported by separate support shafts, flexural oscillation can be eliminated and the increased rigidity and hence increased weight and manufacturing cost can be avoided.

According to the invention, wherein partial warp tension transmitted to either one of the arms is detected and the tension of the whole warp yarns is calculated on the basis of the detected partial warp tension, it can offer an advantage, in addition to the first embodiment of the invention, where the use of a single warp tension detector does well serve for the purpose of controlling the warp yarn tension as conventionally practiced.

It is an object of the invention is to provide a warp tension detecting apparatus having a good durability. The warp yarn sheet T unwound from the warp beam 1 is fed while being guided by the back roller 2 and then the warp tension detecting roller 3. The warp tension detecting roller 3 is supported at its opposite ends by easing levers 12, 13 which are in turn supported depending therefrom by means of pins 14, 15. The warp tension detecting arms 10, 11 are supported independently and rotatably by the back brackets by way of the separate support shafts 6, 7, respectively. The rotation of the warp tension detecting arm 10 about the shaft 6 is stopped by the load cell 19 and the rotation of the other arm 11 about the shaft 7 is stopped by the rod 18.

DESIGNATION OF REFERENCE NUMERALS

3.... Tension detecting roller; 6, 7.... Support shafts; 10, 11 .... Tension detecting arms; 19.... Load cell; T .... Warp yarn sheet.

**Claims**

1. Apparatus for detecting warp tension in a weaving loom having a roller (3) for detecting the tension of warp yarns (T) being let off from a warp beam (1) while guiding such warp yarns (T), said tension detecting roller (3) being supported at its opposite ends by respective tension detecting arms (10, 11) and said detecting arms (10, 11) being supported by separate shafts (5, 6).

2. Apparatus for detecting warp tension in a weaving loom having a roller (3) for detecting the tension of warp yarns (T) being let off from a warp beam (1) while guiding such warp yarns (T), said tension detecting roller (3) being supported at one of its opposite ends by a tension detecting arm (10), said tension detecting arm (10) being supported by a separate shaft (6).

3. Apparatus as claimed in claim 2, said detecting roller (3) being supported on each of its opposite ends by a tension detecting arm (10, 11), said tension detecting arms (10, 11) being supported by separate shafts (6, 5).

4. Apparatus as claimed in claim 2 or claim 3, further including easing lever means (12, 13, 16, 17) pivotally conntected (14, 15) to said tension detecting arm/s (10, 11) and the roller (3) being mount on the easing levers (12, 13), said easing levers (12, 13) being periodically moved forth and back by easing lever drive means (12, 13) in response to the change of the warp tension, thereby causing the tension detecting roller (3) to swing in synchronism with the periodic change in the warp tension, as to absorb/compensate such change in warp tension.

5. Apparatus as claimed in any of claims 1 to 4, further including at least one load measuring cell (19, 22) connected to a tension detecting arm (10, 11) and for measuring tension of at least part of the tension load ($T_1$, $T_2$) exercised onto the detecting roller (3) by at least part of warp threads of the warp sheet (T).

6. Apparatus as claimed in any of claims 1 to 5, further including computer means (C) for cal-culating the warp tension ($T_1$, $T_2$, $T_{12}$) of part or all of the warp threads of the warp sheet (T)

7. Method for detecting warp tension in a warp tension detecting apparatus in a weaving loom having a roller (3) for detecting the tension of warp yarns (T) being let off from a warp beam (1) while guiding such warp yarns (T), said tension detecting roller (3) being supported at its opposite ends by respective tension detecting arms (10, 11) and said detecting arms (10, 11) being supported by separate shafts (14, 15) so that the whole warp tension received by said roller (3) is complementarily distributed to said arms (10, 11), wherein partial warp tension distributed to either one of said arms (10, 11) is detected (19) and the whole warp tension is calculated (C) on the basis of said detected partial warp tension.

8. Loom with an apparatus for detecting warp tension as per any of claims 1 to 6.

# Fig. 1

# F i g .  2

EP 0 527 705 A1

# Fig. 3

EP 0 527 705 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 179 164 (POLYGRAPH "WERNER LAMBERZ")<br>* page 2, line 96 - page 3, line 27; figures 1,2 *<br>--- | 1-3,5,7 | D03D49/18<br>G01L5/10 |
| A | FR-A-1 288 658 (SULZER)<br>* abstract; figures 1-3 *<br>--- | 4 | |
| A | FR-A-2 577 575 (SAURER)<br>--- | | |
| A | US-A-4 561 580 (TRAIL)<br>----- | | |

TECHNICAL FIELDS SEARCHED (Int. Cl.5)

D03D
G01L

The present search report has been drawn up for all claims

| Place of search | Date of completion of the search | Examiner |
|---|---|---|
| THE HAGUE | 24 NOVEMBER 1992 | BOUTELEGIER C.H.H. |